# EUROPEAN PATENT SPECIFICATION

(11) **EP 0 487 064 B1**
(45) Date of publication and mention of the grant of the patent: **05.02.1997**
(21) Application number: 91119784.6
(22) Date of filing: 19.11.1991
(51) Int. Cl.: G11B 20/18

(54) **Address generating circuit and CD-ROM device using the same**
Schaltungsanordnung zur Erzeugung von Adressen und CD-ROM-Vorrichtung unter Verwendung derselben
Circuit pour générer des adresses et dispositif CD-ROM utilisant un tel circuit

(30) Priority: 19.11.1990 JP 314731/90
(43) Date of publication of application: 27.05.1992
(73) Proprietor: NEC CORPORATION, Tokyo (JP)
(72) Inventor: Nozaki, Minoru, c/o NEC IC Microcomp. System Ltd., Kawasaki-shi, Kanagawa (JP)
(74) Representative: Betten & Resch

(56) References cited:
- EP-A- 0 180 470
- EP-A- 0 288 989
- ELECTRONICS AND WIRELESS WORLD vol. 93, no. 1620, October 1987, SUTTON,SURREY,GB pages 1046 - 1049; J.R.WATKINSON: 'CD : the 600 megabyte rom'

## Description

### FIELD OF THE INVENTION

This invention relates to an address generating circuit and a compact disk read-only memory (CD-ROM) device using the same, and more particularly to, an address generating circuit which generates an address of a memory in case of error correction and a CD-ROM device using the same.

### BACKGROUND OF THE INVENTION

A conventional CD-ROM device includes a central processing unit (CPU), a signal processing unit and a random access memory (RAM).

In operation of error correction of data transferred from a CD-ROM to the RAM, the signal processing unit supplies the CPU with an error correction process starting signal. The CPU supplies the signal processing unit with an address signal calculated in accordance with the error correction process starting signal. The signal processing unit supplies the RAM with the calculated address signal as a RAM address signal, at which stored data are corrected in the RAM.

According to the conventional address generating circuit, however, there is a disadvantage in that there requires many steps to generate addresses, because the RAM address signal is supplied from the signal processing unit as a result of logic calculations by the CPU. Therefore, the probability of correcting data error may remain low. Further, the CPU can not exhibit its performance properly, because the CPU is burdened with heavy load including operation of generating addresses in accordance with the logic calculation.

EP-A-288 989 discloses an address generating circuit which generates a reading address for reading a buffer memory so that so-called P and Q codes for CD-ROM which have parameters i and g can be decoded. The address generating circuit is constructed by a logical circuit which operates in accordance with an arrangement of respective code words, and the address generating circuit generates addresses with respect to a memory in which the data and the parity symbols being added to the data are sequentially stored to decode the errror correcting code which is composed of the data and parity symbols. Data and parity symbols are sequentially read from the memory in the order corresponding to the order for decoding. There is a first operation circuit for operating a symbolic location of each symbol based on at least the order number of the symbol of said error correcting code words, and a second operation circuit operates an address of each symbol with respect to said memory based on at least the symbolic location being outputted from the first operation circuit. The CD-ROM device comprises a RAM for storing data to be read from a CD-ROM, a CPU for controlling operation of reading data from the CD-ROM and a processing unit for processing signals between the RAM and the CPU.

### SUMMARY OF THE INVENTION

Accordingly, it is an object of the invention to provide an address generating circuit in which the probability of data error correction is high, and to provide a CD-ROM device using the same.

It is another object of the invention to provide an address generating circuit in which a load of a CPU is reduced, and to provide a CD-ROM device using the same.

The present invention is disclosed in claims 1 and 2.

### BRIEF DESCRIPTION OF THE DRAWINGS

The invention will be explained in more detail in conjunction with appended drawings wherein:
Fig. 1 is a block schematic diagram of a conventional CD-ROM device;
Fig. 2 is a block schematic diagram of a signal processing unit of a CD-ROM device including an address generating circuit in a preferred embodiment according to the invention;
Fig. 3 is an address map showing addresses of a RAM generated by the address generating circuit in the preferred embodiment according to the invention;
Fig. 4 is a list showing contents of elements of the address generating circuit in case of generating Q-system addresses; and
Fig. 5 is a list showing contents of elements of the address generating circuit in case of generating P-system addresses.

### DESCRIPTION OF THE PREFERRED EMBODIMENTS

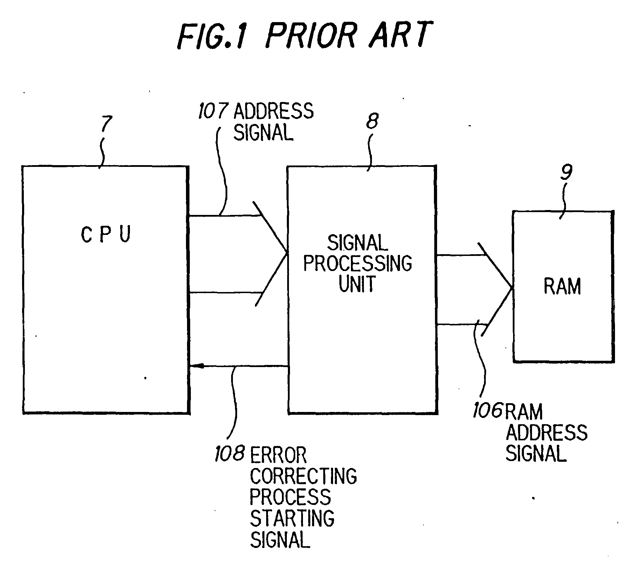

Before describing an address generating circuit and a CD-ROM device in a preferred embodiment according to the invention, the conventional address generating circuit described before will be explained in conjunction with Fig. 1.

A conventional CD-ROM device includes a CPU 7, a signal processing unit 8 and a RAM 9. The RAM 9 is stored with data read from a CD-ROM device (not shown). The stored data is processed in the signal processing unit 8. In this operation, error data may be stored in the RAM 9. In such a case, the error data is required to be corrected as high in probability as possible. For this purpose, an address of the data correction must be generated in the address signal generating circuit. In the CD-ROM device, the RAM address signal is supplied from the signal processing unit 8 as a result of logic calculation process by the CPU 7, as explained before, so that the probability of error data correction is relatively small, and the CPU 7 is burdened with heavy load including such address generation.

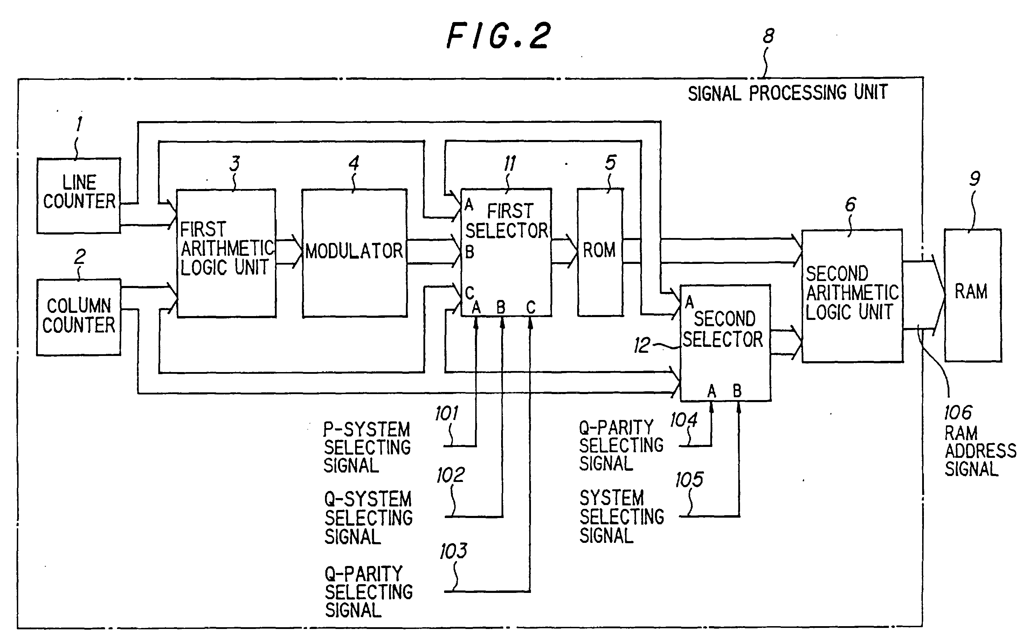

Next, an address generating circuit in a preferred embodiment according to the invention will be explained. Fig. 2 shows an address generating circuit in a preferred embodiment. The address generating circuit includes a line counter 1 which counts line numbers of addresses, a column counter 2 which counts column numbers thereof, a first arithmetic logic unit 3 which makes a sum of outputs of the line and column counters 1 and 2, a modulator 4 which modulates an output of the first arithmetic logic unit 3, a first selector 11 which selects an output from outputs of the line and column counters 1 and 2 and the modulator 4 in accordance with P- and Q-system selecting signals 101 and 102 and a Q-parity selecting signal 103, a ROM 5 which stores start addresses of the address lines and supplies an output in accordance with an output of the first selector 11, a second selector 12 which selects an output from outputs of the line and column counters 1 and 2 and the ROM 5 in accordance with a Q-parity selecting signal 104 and a system selecting signal 105, and a second arithmetic logic unit 6 which makes a sum of outputs of the ROM 5 and the second selector 12. The modulator 4 generates a modulated ouput signal of 0 to 25 corresponding to an input signal supplied from the first arithmetic logic unit 3, as indicated in the below table.

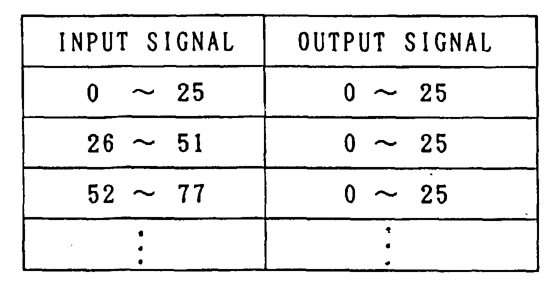

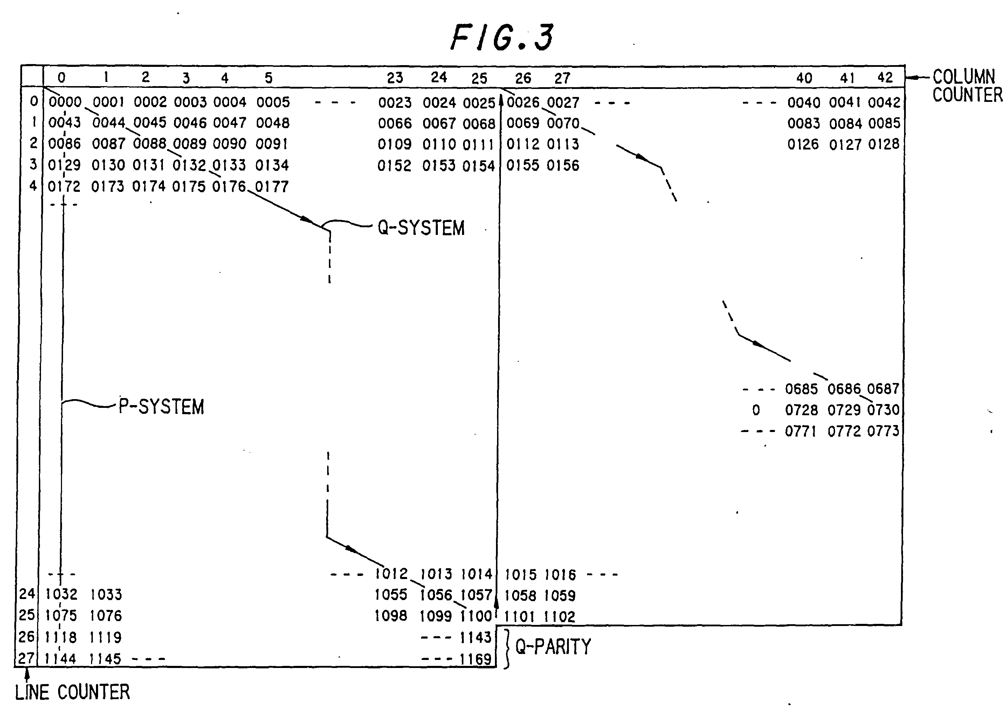

As described before, the ROM 5 stores the start address "0000", "0043", "0086", .... of the line addresses at the counted number of "0" of the column counter 2, as described in an address map of the RAM 9 shown in Fig. 3, in which Q- and P-systems of address generation are indicated by arrows.

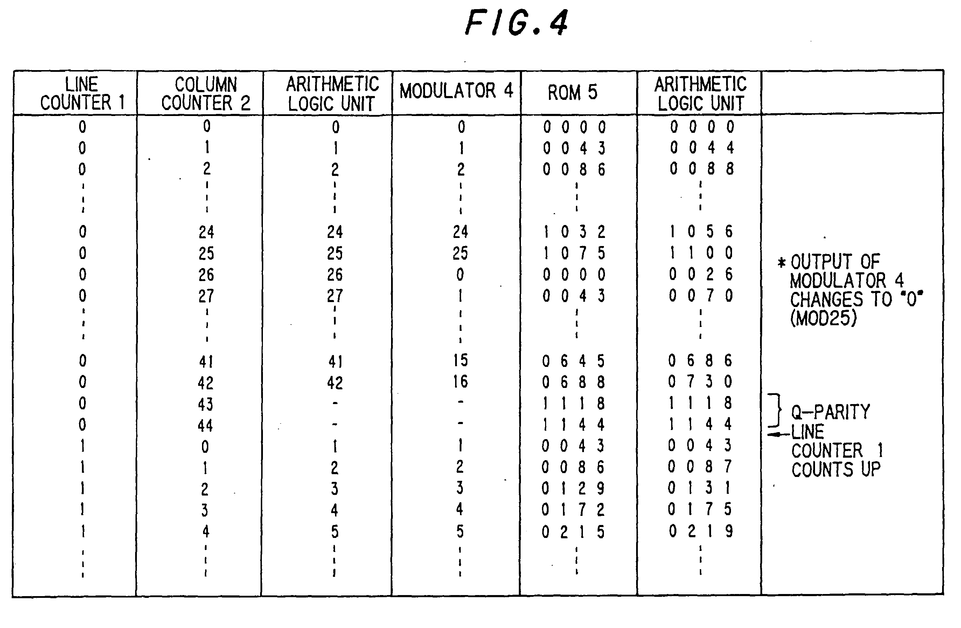

Next, operation of the address generating circuit will be explained in conjunction with Figs. 3 to 5. First, operation of generating addresses of a Q-system will be explained in conjunction with Fig. 4. In operation, the first arithmetic logic unit 3 makes a sum of contents of the line and column counters 1 and 2. The modulator 4 generates a modulated number from an output of the first arithmetic logic unit 3. When the input becomes "26", then the modulator 4 supplies "0", and increases the number again. When the column number of the column counter 2 becomes "43" or "44", these numbers are identified as Q-parities, so that the predetermined addresses of "1118" or "1144" are designated in the ROM 5. Then, the column number of the column counter 2 is set to be "0". The first selector 11 selects the output of the modulator 4 in accordance with the Q-system selecting signal 101 to be supplied to the ROM 5 when the column number of the address column is at most "42". The ROM 5 supplies the start address of the address lines to be supplied to the second arithmetic logic unit 6. On the other hand, the second selector 12 selects an output of the column counter 2 in accordance with the system selecting signal 105 to be supplied to the second arithmetic logic unit 6. The second arithmetic logic unit 6 makes a sum of the start address read from the ROM 5 and the counted number of the column counter 2 to be supplied to the RAM 9 as the RAM address signal 106. When the counted number of the column counter 2 is "43" or "44", then the first selector 11 selects the output of the column counter 2 to be supplied to the ROM 5 in accordance with the Q-parity selecting signal 103, so that the ROM 5 supplies the addresses of "1118" or "1144" to the second arithmetic logic unit 6, respectively. The second selector 12 selects the output of the line counter 1 to be supplied to the second arithmetic logic unit 6 in accordance with the Q-parity selecting signal 104. The second arithmetic logic unit 6 makes a sum of the predetermined address of "1118" or "1144" and the counted number of the line counter 1 to be supplied to the RAM 9 as the RAM address signal 106.

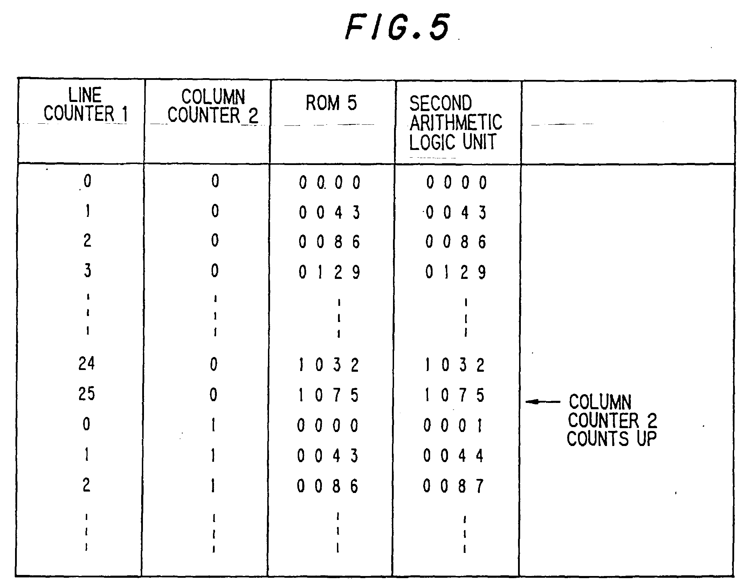

Next, operation of generating addresses of a P-system will be explained in conjunction with Fig. 5. In operation, the first selector 11 selects the output of the line counter 1 in accordance with the P-system selecting signal 101 to be supplied to the ROM 5 when the column number of the address column is at most "42". The ROM 5 supplies the start address of the address lines to be supplied to the second arithmetic logic unit 6. On the other hand, the second selector 12 selects an output of the column counter 2 in accordance with the system selecting signal 105 to be supplied to the second arithmetic logic unit 6. The second arithmetic logic unit 6 makes a sum of the start address read from the ROM 5 and the counted number of the column counter 2 to be supplied to the RAM 9 as the RAM address signal 106.

In the CD-ROM device, the signal processing unit 8 includes the address generating circuit as explained above, so that the RAM address signal 106 is directly supplied to the RAM 9 from the signal processing unit 8 without using the CPU. Therefore, there requires fewer steps to generate addresses than those required in the conventional CD-ROM device, so that the probability of the error correction increases. Further, the load of the CPU is reduced, so that the CPU can exhibit its performance properly.

## Claims

1. An address generating circuit for generating addresses of a RAM suitable for error correction, the addresses of said RAM being represented by an address map arranged in lines and columns permitting the generation of P- and Q-system addresses, said circuit comprising:
a line counter (1) for counting line numbers of addresses of said address map;
a column counter (2) for counting column numbers of addresses of said address map (9);
a first logic circuit (3) for making a sum of outputs of said line and column counters (1, 2);
a modulator (4) for modulating an output of said first logic circuit (3) as input number to provide a modulated output number, said modulated output number is equal to said input number, when said input number is less than a predetermined number, and said modulated output number is a number obtained by subtracting said predetermined number or n times of said predetermined number from said input number (n = 1, 2, ...) when said input number is greater than or equal to said predetermined number, said output number being within the range from 0 to said predetermined number minus 1;
a first selector (11) for selecting one output from the outputs of said line and column counters (1, 2) and said modulator (4) in dependence with which of the P- or Q-system addresses are generated;
a ROM (5) in which start addresses for each line of addresses of said address map and which is addressed by the output of said first selector (11) are stored;
a second selector (12) for selecting one output from the outputs of said line and column counters (1, 2) in dependence with which of the P- or Q-system addresses are generated; and
a second logic circuit (6) for making a sum of outputs of said ROM (5) and said second selector (12) to be supplied to said RAM (9) as an address.

2. A CD-ROM device comprising:
a RAM (9) suitable for error correction and for storing data to be read from a CD-ROM, the addresses of said RAM being represented by an address map arranged in lines and columns permitting the generation of P- and Q-system addresses;
a CPU (7) for controlling operation of reading data from said CD-ROM; and
a signal processing unit (8) for processing signals between said RAM (9) and said CPU (7);
characterized in that
said signal processing unit (8) comprises an address generating circuit which comprises a line counter (1) for counting line numbers of addresses of said address map (9), a column counter (12) for counting column numbers of addresses of said address map (9), a first logic circuit (3) for making a sum of outputs of said line and column counters (1, 2), a modulator (4) for modulating an output of said first logic circuit (3) as input number to provide a modulated output number, said modulated output number is equal to said input number, when said input number is less than a predetermined number, and said modulated output number is a number obtained by subtracting said predetermined number or n times of said predetermined number from said input number (n = 1, 2, ...) when said input number is greater than or equal to said predetermined number, said output number being within the range from 0 to said predetermined number minus 1, a first selector (11) for selecting one output from the outputs of said line and column counters (1, 2) and said modulator (4) in dependence with which of the P- or Q-system addresses are generated, a ROM (5) in which start addresses for each line of addresses of said address map are stored; and which is addressed by the output of said first selector (11); a second selector (12) for selecting one output from the outputs of said line and column counters (1, 2) in dependence with which of the P- or Q-system addresses are generated, and a second logic circuit (6) for making a sum of outputs of said ROM (5) and said second selector (12) to be supplied to said RAM (9) as an address.

## Patentansprüche

1. Adressenerzeugungsschaltung zum Erzeugen von Adressen eines RAM, das für eine Fehlerkorrektur geeignet ist, wobei die Adressen des RAM durch eine Adressenabbildung bzw. Adressen-Map dargestellt sind, die in Zeilen und Spalten angeordnet ist und die Erzeugung von P- und Q-Systemadressen ermöglicht, wobei die Schaltung enthält:
einen Zeilenzähler (1) zum Zählen von Zeilennummern von Adressen der Adressenabbildung;
einen Spaltenzähler (2) zum Zählen von Spaltennummern von Adressen der Adressenabbildung;
eine erste Logikschaltung (3) zum Erzeugen einer Summe aus den Ausgängen des Zeilen- bzw. des Spaltenzählers (1, 2);
einen Modulator (4) zum Modulieren eines als Eingangsnummer dienenden Ausgangs der ersten Logikschaltung (3), um eine modulierte Ausgangsnummer zu erzeugen, die gleich der Eingangsnummer ist, wenn die Eingangsnummer kleiner als eine vorgegebene Nummer ist, und die eine Nummer ist, die durch Subtrahieren der vorgegebenen Nummer oder der n-fachen vorgegebenen Nummer von der Eingangsnummer (n = 1, 2, ...) erhalten wird, wenn die Eingangsnummer größer oder gleich der vorgegebenen Nummer ist, wobei die Ausgangsnummer im Bereich von 0 bis zur vorgegebenen Nummer minus 1 liegt;
eine erste Auswahleinrichtung (11) zum Auswählen eines Ausgangs von den Ausgängen des Zeilen- bzw. des Spaltenzählers (1, 2) und des Modulators (4), wobei in Abhängigkeit davon die P- oder Q-Systemadressen erzeugt werden,
einen ROM (5), in dem Startadressen für jede Zeile von Adressen der Adressenabbildung gespeichert sind und der durch den Ausgang der ersten Auswahleinrichtung (11) adressiert wird;
eine zweite Auswahleinrichtung (12) zum Auswählen eines Ausgangs von den Ausgängen des Zeilen- bzw. des Spaltenzählers (1, 2), wobei in Abhängigkeit davon die P- oder Q-Systemadressen erzeugt werden; und
eine zweite Logikschaltung (6) zum Erzeugen einer Summe aus den Ausgängen des ROM (5) und der zweiten Auswahleinrichtung (12), die an den RAM (9) als eine Adresse geliefert wird.

2. CD-ROM-Vorrichtung, mit:
einem RAM (9), der für eine Fehlerkorrektur geeignet ist und von einer CD-ROM zu lesende Daten speichert, wobei die Adressen des RAM durch eine Adressenabbildung bzw. Adressen-Map dargestellt sind, die in Zeilen und Spalten angeordnet ist, die die Erzeugung von P- und Q-Systemadressen ermöglichen;
einer CPU (7) zum Steuern der Operation des Lesens von Daten von der CD-ROM; und
einer Signalverarbeitungseinheit (8) zum Verarbeiten von Signalen zwischen dem RAM (9) und der CPU (7); dadurch gekennzeichnet, daß
die Signalverarbeitungseinheit (8) eine Adressenerzeugungsschaltung enthält, die ihrerseits versehen ist mit einem Zeilenzähler (1) zum Zählen von Zeilennummern von Adressen der Adressenabbildung (9), einem Spaltenzähler (12) zum Zählen von Spaltennummern von Adressen der Adressenabbildung (9), einer ersten Logikschaltung (3) zum Erzeugen einer Summe aus den Ausgängen des Zeilen- und des Spaltenzählers (1, 2), einem Modulator (4) zum Modulieren eines als Eingangsnummer dienenden Ausgangs der ersten Logikschaltung (3), um eine modulierte Ausgangsnummer zu erzeugen, die gleich der Eingangsnummer ist, wenn die Eingangsnummer kleiner als eine vorgegebene Nummer ist, und die eine Nummer ist, die durch Subtrahieren der vorgegebenen Nummer oder der n-fachen vorgegebenen Nummer von der Eingangsnummer (n = 1, 2, ...) erhalten wird, wenn die Eingangsnummer größer oder gleich der vorgegebenen Nummer ist, wobei die Ausgangsnummer im Bereich von 0 bis zu der vorgegebenen Nummer minus 1 liegt, einer ersten Auswahleinrichtung (11) von Auswählen eines Ausgangs von den Ausgängen der Zeilen- und Spaltenzähler (1, 2) und des Modulators (4), wobei in Abhängigkeit davon die P- oder Q-Systemadressen erzeugt werden, einem ROM (5), in dem Startadressen für jede Zeile der Adressenabbildung von Adressen gespeichert sind und der durch den Ausgang der ersten Auswahleinrichtung (11) adressiert wird, einer zweiten Auswahleinrichtung (12) zum Auswählen eines Ausgangs von den Ausgängen der Zeilen- und Spaltenzähler (1, 2), wobei in Abhängigkeit davon die P- oder Q-Systemadressen erzeugt werden, und einer zweiten Logikschaltung (6) zum Erzeugen einer Summe aus den Ausgängen des ROM (5) und der zweiten Auswahleinrichtung (12), die an den RAM (9) als eine Adresse geliefert wird.

## Revendications

1. Circuit de génération d'adresses pour générer des adresses d'une RAM adapté à la correction d'erreur, les adresses de ladite RAM étant représentées par une carte d'adresses disposée en lignes et en colonnes permettant la génération d'adresses de systèmes P et Q, ledit circuit comprenant :
- un compteur de lignes (1) pour compter des numéros de lignes d'adresses de ladite carte d'adresses;
- un compteur de colonnes (2) pour compter des numéros de colonnes d'adresses de ladite carte d'adresses (9);
- un premier circuit logique (3) pour faire une somme des sorties desdits compteurs de lignes et de colonnes (1, 2);
- un modulateur (4) pour moduler une sortie dudit premier circuit logique (3) en tant que nombre d'entrée pour fournir un nombre de sortie modulé, ledit nombre de sortie modulé étant égal audit nombre d'entrée lorsque ledit nombre d'entrée est inférieur à un nombre prédéterminé, et ledit nombre de sortie modulé étant un nombre obtenu en soustrayant ledit nombre prédéterminé ou n fois ledit nombre prédéterminé dudit nombre d'entrée (n = 1, 2, ...) lorsque ledit nombre d'entrée est supérieur ou égal audit nombre prédéterminé, ledit nombre de sortie étant compris entre 0 et ledit nombre prédéterminé moins 1;
- un premier sélecteur (11) pour choisir une sortie parmi les sorties desdits compteurs de lignes et de colonnes (1, 2) et ledit modulateur (4) selon que les adresses du système P ou Q sont générées;
- une ROM (5) dans laquelle les adresses de début pour toutes les lignes d'adresses de ladite carte d'adresses sont mémorisées et qui est adressée par la sortie dudit premier sélecteur (11);
- un second sélecteur (12) pour choisir une sortie parmi les sorties desdits compteurs de lignes et de colonnes (1, 2) selon que les adresses du système P ou Q sont générées; et
- un second circuit logique (6) pour faire une somme des sorties de ladite ROM (5) et dudit second sélecteur (12), qui doit être fournie à ladite RAM (9) en tant qu'adresse.

2. Dispositif CD-ROM, comprenant :
- une RAM (9) adaptée à la correction d'erreur et pour mémoriser des données qui doivent être lues depuis un CD-ROM, les adresses de ladite RAM étant représentées par une carte d'adresses disposée en lignes et en colonnes permettant la génération d'adresses de systèmes P et Q;
- une UC (7) pour commander l'opération de lecture de données depuis ledit CD-ROM; et
- une unité de traitement de signal (8) pour traiter des signaux entre ladite RAM (9) et ladite UC (7);
caractérisé en ce que ladite unité de traitement de signal (8) comprend un circuit de génération d'adresses qui comprend un compteur de lignes (1) pour compter des numéros de lignes d'adresses de ladite carte d'adresses (9); un compteur de colonnes (12) pour compter des numéros de colonnes d'adresses de ladite carte d'adresses (9); un premier circuit logique (3) pour faire une somme des sorties desdits compteurs de lignes et de colonnes (1, 2); un modulateur (4) pour moduler une sortie dudit premier circuit logique (3) en tant que nombre d'entrée pour fournir un nombre de sortie modulé, ledit nombre de sortie modulé étant égal audit nombre d'entrée lorsque ledit nombre d'entrée est inférieur à un nombre prédéterminé, et ledit nombre de sortie modulé étant un nombre obtenu en soustrayant ledit nombre prédéterminé ou n fois ledit nombre prédéterminé dudit nombre d'entrée (n = 1, 2, ...) lorsque ledit nombre d'entrée est supérieur ou égal audit nombre prédéterminé, ledit nombre de sortie étant compris entre 0 et ledit nombre prédéterminé moins 1; un premier sélecteur (11) pour choisir une sortie parmi les sorties desdits compteurs de lignes et de colonnes (1, 2) et ledit modulateur (4) selon que les adresses du système P ou Q sont générées; une ROM (5) dans laquelle les adresses de début pour toutes les lignes d'adresses de ladite carte d'adresses sont mémorisées et qui est adressée par la sortie dudit premier sélecteur (11); un second sélecteur (12) pour choisir une sortie parmi les sorties desdits compteurs de lignes et de colonnes (1, 2) selon que les adresses du système P ou Q sont générées; et un second circuit logique (6) pour faire une somme des sorties de ladite ROM (5) et dudit second sélecteur (12), qui doit être fournie à ladite RAM (9) en tant qu'adresse.
